(19) Europäisches Patentamt
European Patent Office
Office européen des brevets

(11) EP 4 814 163 A1

# (12) EUROPEAN PATENT APPLICATION
published in accordance with Art. 153(4) EPC

(43) Date of publication:
**30.09.2026 Bulletin 2026/40**

(21) Application number: **24893912.6**

(22) Date of filing: **17.10.2024**

(51) International Patent Classification (IPC):
***C23C 28/00*** *(2006.01)* ***B32B 15/01*** *(2006.01)*
***B32B 15/08*** *(2006.01)* ***C23C 22/60*** *(2006.01)*
***C23C 22/68*** *(2006.01)*

(52) Cooperative Patent Classification (CPC):
**B32B 15/01; B32B 15/08; C23C 22/60; C23C 22/68; C23C 28/00**

(86) International application number:
**PCT/JP2024/036958**

(87) International publication number:
**WO 2025/109918 (30.05.2025 Gazette 2025/22)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **22.11.2023 JP 2023197867**

(71) Applicant: **Toyo Kohan Co., Ltd.**
**Tokyo 141-8260 (JP)**

(72) Inventors:
- **YOSHISUE, Yukihiro**
  **Kudamatsu-shi Yamaguchi 744-8611 (JP)**
- **FUJII, Shunsuke**
  **Tokyo 141-8260 (JP)**
- **YAMASAKI, Hideki**
  **Kudamatsu-shi Yamaguchi 744-8611 (JP)**

(74) Representative: **Hoffmann Eitle**
**Patent- und Rechtsanwälte PartmbB**
**Arabellastraße 30**
**81925 München (DE)**

## (54) SURFACE-TREATED GALVANIZED STEEL SHEET, RESIN FILM-COATED STEEL SHEET, BUILDING PANEL, METHOD FOR MANUFACTURING SURFACE-TREATED GALVANIZED STEEL SHEET, AND METHOD FOR MANUFACTURING RESIN FILM-COATED STEEL SHEET

(57) [Object]

To provide a surface-treated galvanized steel sheet, a resin film-coated steel sheet, and a building panel that have excellent corrosion resistance and onprocessing adhesion to a resin film.

[Solving Means]

A surface-treated galvanized steel sheet includes a steel sheet, a galvanized layer formed on the steel sheet, a first chemically treated coating layer formed on the galvanized layer and containing cobalt metal in a range of 5 to less than 30 mg/m$^2$, and a second chemically treated coating layer formed on the first chemically treated coating layer and containing (a) a zirconium component, (b) a binding component originating from dehydration condensation of a silanol group, and (c) a urethane binding component.

FIG. 1

100
20
23
21
13
10
11
13
20
21
23

EP 4 814 163 A1

## Description

[Technical Field]

The present disclosure relates to a surface-treated galvanized steel sheet and a resin film-coated steel sheet. In addition, the present disclosure relates to a building panel using a surface-treated galvanized steel sheet and a resin film-coated steel sheet. Moreover, the present disclosure relates to a method of manufacturing a surface-treated galvanized steel sheet and a method of manufacturing a resin film-coated steel sheet.

[Background Art]

In recent years, there have been strong demands for the reduction of environmental burdens imposed by surface-treated steel sheets for use as building panels as exemplified by bathroom panels and kitchen panels, for example. Specifically, surface-treated steel sheets free of chromate coatings have been required from the standpoints of water pollution prevention and soil contamination measures.

For example, PTL 1 referred to below discloses a method of manufacturing a galvanized steel sheet having excellent planar-part corrosion resistance and coating adhesion, by forming a first coating on a surface of a galvanized steel sheet with use of a first surface treatment liquid containing an ionic bonding salt that includes predetermined cations, a predetermined chelating agent, and water, and then forming a second coating on a surface of the first coating with use of a second surface treatment liquid containing predetermined amounts of a silane coupling agent having a glycidyl group, tetraalkoxysilane, a zirconium carbonate compound, a predetermined anionic polyurethane resin, a vanadium compound, a molybdic acid compound, and water.

PTL 2 discloses a precoated steel sheet having excellent corrosion resistance and processability. The precoating steel sheet includes a galvanized steel sheet whose both surfaces are treated by a chromium-free surface treatment process. One of the treated surfaces, which acts as a face side, has thereon an undercoating layer including at least one of an ion-exchange oxide rust prevention pigment or a phosphoric acid rust prevention pigment with a binder of polyester-based resin and/or epoxy-modified polyester-based resin and one or more overcoating layers on the undercoating layer, whereas the other treated surface, which acts as a reverse side, has thereon an undercoating layer including at least one of an ion-exchange oxide rust prevention pigment or a phosphoric acid rust prevention pigment with a binder of polyester-based resin and/or epoxy-modified polyester-based resin and one or more overcoating layers on the undercoating layer.

PTL 3 discloses a chromate-free surface-treated metal material that has been treated by a chromium-free surface treatment process for satisfying corrosion resistance, heat resistance requirements, and the like. The metal material is coated with a zinc (Zn)-cobalt (Co) plating coating containing a trace amount of Co, and is further coated with an aqueous metal surface treatment agent including an organic silicon compound (W) obtained by mixing a silane coupling agent (A) containing one amino group among molecules and a silane coupling agent (B) containing one glycidyl group among molecules at a solid mass ratio [(A)/(B)] of 0.5 to 1.7 with each other, at least one fluorine compound (X) selected from hexafluorotitanic acid or hexafluorozirconic acid, phosphoric acid (Y), and a vanadium compound (Z), the aqueous metal surface treatment agent being dried to form a compound coating that contains the components.

PTL 4 discloses a coated steel sheet having sufficiently enhanced corrosion resistance and processed-part adhesion. The coated steel sheet includes a steel sheet, a galvanized plated layer, a phosphated layer in which the total deposited amount of Ni and Co is in a range of 20 to 100 g/$m^2$ and the deposited amount of the phosphate is in a range of 2.0 to 7.0 g/$m^2$, a chromium-free sealing layer containing an oxoate of a group 4 metal and a group 1 metal or its salt, and an organic coating, the layers and the coatings being arranged in the order named.

PTL 5 discloses a chemically treated steel sheet having excellent coating adhesion after processing and film bonding strength. The chemically treated steel sheet includes a galvanized steel sheet or a galvanized alloy steel sheet as a base material whose surface is coated with a chemically treated coating of an oxide or hydroxide of valve metal, the oxide exhibiting high insulation resistance, and fluoride and polyphenol resin, in which the chemically treated coating has a thickness ranging from 0.01 to 0.5 μm.

[Citation List]

[Patent Literature]

[PTL 1]
JP 2022-39097A
[PTL 2]

JP 2007-119858A
[PTL 3]
JP 2008-184659A
[PTL 4]
JP 2020-152986A
[PTL 5]
JP 2008-163364A

[Summary]

[Technical Problems]

However, all PTL 1 through PTL 5 referred to above remain to be improved with regard to the demands for materials of building panels at present. Specifically, it has been customary in recent years to affix resin films of artistic design to chemically treated surfaces of surface-treated steel sheets for use as building panels that need to be available in many appearance variations.

In addition, it has also been practiced to press surface-treated steel sheets coated with resin films of polyester, polyvinyl chloride, or the like into various shapes. Consequently, surface-treated steel sheets are required to have excellent corrosion resistance and high on-processing adhesion to resin films, so that the surface-treated steel sheets will be able to withstand tough environments such as use in bathrooms, for example.

The present invention has been devised as a result of intensive study of the makeup of materials of building panels that allow resin films to adhere thereto to a high degree of adhesion. In other words, the present disclosure provides a surface-treated galvanized steel sheet having on-processing adhesion to a resin film in addition to corrosion resistance equivalent to conventional chromate coatings.

[Solution to Problems]

In order to solve the above problems, a surface-treated galvanized steel sheet according to an embodiment of the present disclosure includes a steel sheet, a galvanized layer formed on the steel sheet, a first chemically treated coating layer formed on the galvanized layer and containing cobalt metal in a range of 5 to less than 30 mg/m$^2$, and a second chemically treated coating layer formed on the first chemically treated coating layer and containing (a) a zirconium component, (b) a binding component originating from dehydration condensation of a silanol group, and (c) a urethane binding component.

In addition, a resin film-coated steel sheet according to an embodiment of the present disclosure includes the surface-treated galvanized steel sheet described above, an adhesive layer formed on the surface-treated galvanized steel sheet; and a resin film formed on the adhesive layer.

Moreover, a building panel according to an embodiment of the present disclosure includes the resin film-coated steel sheet described above.

A method of manufacturing a surface-treated galvanized steel sheet according to an embodiment of the present disclosure includes a first treating step of forming, on the galvanized layer, a first chemically treated coating layer containing cobalt metal in a range of 5 to less than 30 mg/m$^2$ on a galvanized steel sheet by coating the galvanized steel sheet with an alkaline treating agent that includes a metal chelating agent containing cobalt(II) nitrate hexahydrate and ferric nitrate, and a second treating step of coating the first chemically treated coating layer with an aqueous treating agent including a coupling agent, a metal oxide, blocked isocyanurate, and polyester polyol as constituent elements, and drying the aqueous treating agent at 60°C or higher.

A method of manufacturing a resin film-coated steel sheet according to an embodiment of the present disclosure includes a third treating step of coating the surface-treated galvanized steel sheet described above with a polyester-based adhesive to a thickness ranging from 1 to 4 μm, and a fourth treating step of heating the surface-treated galvanized steel sheet coated with the polyester-based adhesive to 180°C or higher and covering the polyester-based adhesive with a resin film.

[Advantageous Effect of Invention]

According to the present disclosure, there are provided a surface-treated galvanized steel sheet, a resin film-coated steel sheet, and a building panel that are free of a chromate coating and have excellent corrosion resistance and on-processing adhesion to a resin film.

[Brief Description of Drawings]

[FIG. 1]

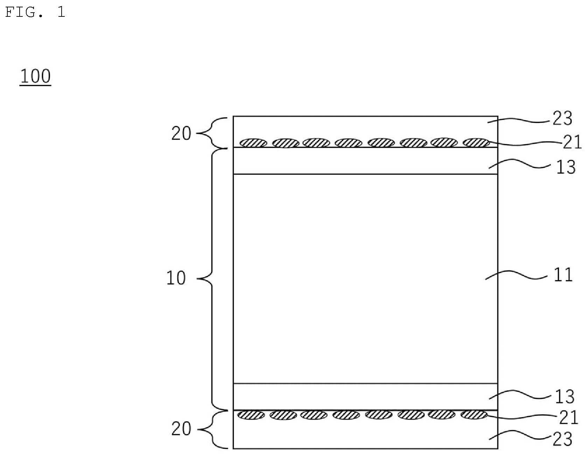

FIG. 1 is a schematic cross-sectional view of a surface-treated galvanized steel sheet according to an embodiment.
[FIG. 2]

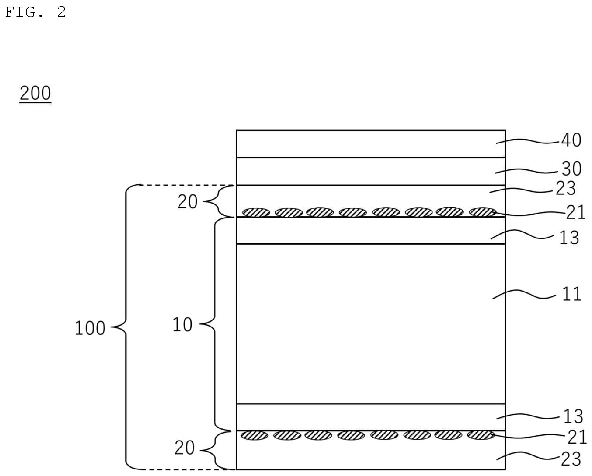

FIG. 2 is a schematic cross-sectional view of a resin film-coated steel sheet according to the embodiment.
[FIG. 3]

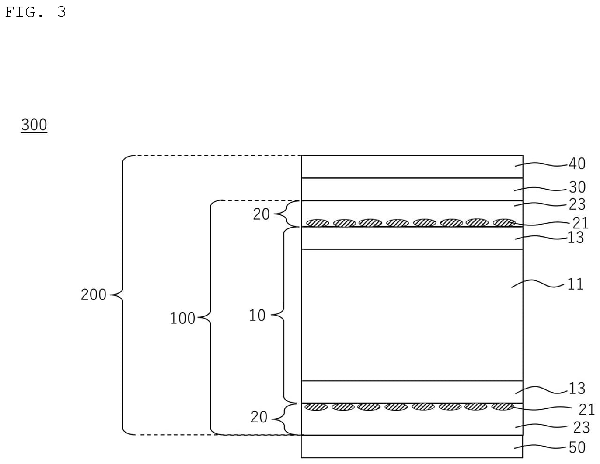

FIG. 3 is a schematic cross-sectional view of a building panel according to the embodiment.
[FIG. 4]

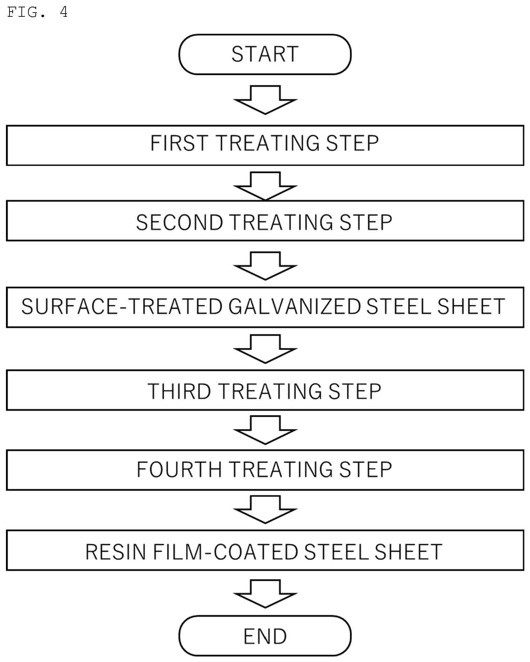

FIG. 4 is a diagram illustrating a method of manufacturing a surface-treated galvanized steel sheet and a resin film-coated steel sheet.
[FIG. 5]

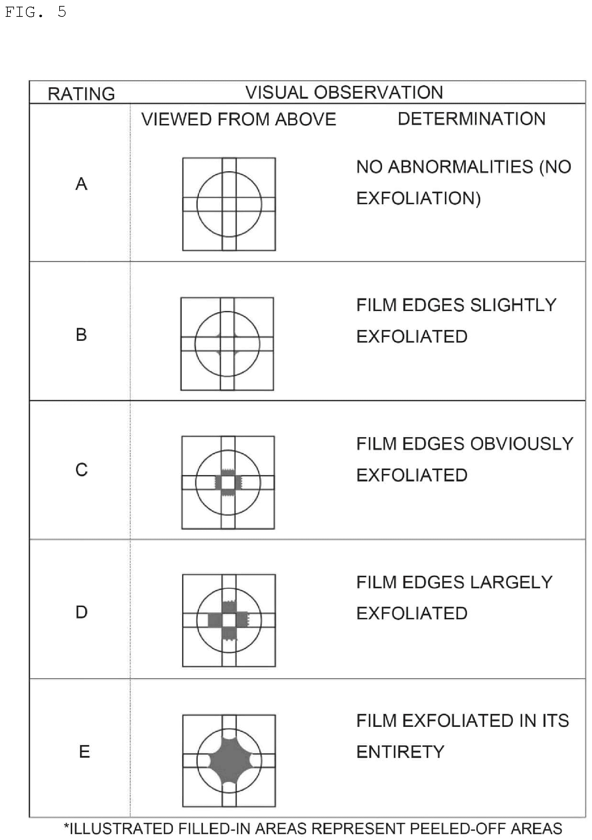

FIG. 5 is a diagram schematically illustrating test assessment standards according to the present embodiment.

[Description of Embodiment]

<Surface-treated galvanized steel sheet 100>

A surface-treated galvanized steel sheet according to the present embodiment will be described in detail below. As illustrated in FIG. 1, the surface-treated galvanized steel sheet, denoted by 100, according to the present embodiment has a galvanized steel sheet 10 and a chemically treated film 20 with which at least one surface of the galvanized steel sheet 10 is coated. The galvanized steel sheet 10 includes a steel sheet 11 and a galvanized layer 13 formed on the steel sheet 11. The chemically treated film 20 includes a first chemically treated coating layer 21 on the galvanized layer 13 and a second chemically treated coating layer 23 covering both the galvanized layer 13 and the first chemically treated coating layer 21.

<Galvanized steel sheet 10>

The galvanized steel sheet 10 that is used in the present embodiment can be a galvanized steel sheet that is generally used in laminated sheet metal. Such a galvanized steel sheet may be, for example, a hot-dip galvanized steel sheet, a hot-dip galvanized alloy steel sheet, a hot-dip galvannealed steel sheet, an electro-galvanized steel sheet, or an electro-galvanized alloy steel sheet. Of these steel sheets, the hot-dip galvanized steel sheet (Japanese Industrial Standards (JIS) G3302) should preferably be used for its better availability and price, for example.

Though the galvanized steel sheet 10 is not subject to particular thickness limitations, it should preferably have a thickness in a range of 0.10 to 1.20 mm, for example, from the standpoints of ease of installation and appearance. If the thickness of the galvanized steel sheet 10 is smaller than 0.1 mm, then it may possibly lack preferable corrosion resistance and weather resistance. On the other hand, if the thickness of the galvanized steel sheet 10 is larger than 1.2 mm, its weight increases to the extent that it may highly possibly cause trouble upon installation and it may not be preferable from the standpoint of cost.

The steel sheet 11 included in the galvanized steel sheet 10 may be, for example, a cold-rolled steel sheet having a thickness ranging from approximately 0.05 to 1.20 mm. Of cold steel sheets, an extra low carbon aluminum-killed cold-rolled steel sheet that is of low carbon or has a carbon content of less than 0.01 weight % should be used as the steel sheet 11 from the standpoint of processability.

The amount of plated zinc of the galvanized layer 13 formed on the steel sheet 11 may be in a range of approximately 60 to 600 g/$m^2$, for example, though it is not particularly restrictive. More specifically, if the galvanized steel sheet 10 is a hot-dip galvanized steel sheet, the amount of plated zinc should preferably be in a range of Z06 to Z60 that denote symbols indicating the amount of a plated material as specified by JIS G3302: 2019.

<Chemically treated film 20>

The chemically treated film 20 is formed on at least one surface of the galvanized steel sheet 10, as described above. The chemically treated film 20 includes the first chemically treated coating layer 21 covering at least a portion of the surface of the galvanized steel sheet 10 and the second chemically treated coating layer 23 formed on the first chemically treated coating layer 21 and covering the surface of the galvanized steel sheet 10 in its entirety.

<First chemically treated coating layer 21>

The first chemically treated coating layer 21 is a metal coating containing cobalt metal in a range of 5 to less than 30 mg/$m^2$. As illustrated in FIG. 1, the first chemically treated coating layer 21 is kept in contact with the surface of the galvanized steel sheet 10. The first chemically treated coating layer 21 does not necessarily cover the entire surface of the galvanized steel sheet 10, and it is sufficient if the first chemically treated coating layer 21 is present on at least a portion of the surface of the galvanized steel sheet 10.

The first chemically treated coating layer 21 on the surface of the galvanized steel sheet 10 offers the following advantages. Since Co that has a lower ionization tendency than Zn acts as a redox reaction site (cathode), microcells of Co (cathode) and Zn (anode) are formed beneath the first chemically treated coating layer 21. As the microcells are effective to reduce the amount of $OH^-$ beneath the first chemically treated coating layer 21, cathodic delamination and corrosion beneath the first chemically treated coating layer 21 can be restrained.

Incidentally, the first chemically treated coating layer 21 is formed by coating the surface of the galvanized steel sheet 10 with an alkaline treating liquid containing cobalt, as described in greater detail later. When the alkaline treating liquid is applied to the surface of the galvanized steel sheet 10, it dissolves the Zn on the galvanized steel sheet 10, emitting electrons that reduce $Co^{2+}$ ions in the alkaline treating liquid (displacement-type electroless plating).

<Second chemically treated coating layer 23>

The second chemically treated coating layer 23 is an organic-inorganic composite coating containing (a) a zirconium component. The amount of coating of the second chemically treated coating layer should preferably be in a range of 4 to 600 mg/$m^2$ or more preferably be in a range of 30 to 70 mg/$m^2$. The amount of a dry coating of the second chemically treated coating layer can be measured by a known X-ray fluorescence analyzer.

The thickness of the second chemically treated coating layer should preferably be 1 $\mu$m or smaller. The amount of zirconium contained in the second chemically treated coating layer 23 should preferably be in a range of 1.2 to 171.4 mg/$m^2$ or more preferably be in a range of 8.6 to 20.0 mg/$m^2$. Incidentally, the amount of the dry coating of the second chemically treated coating layer can be converted from the amount of zirconium. Specifically, the amount of the dry coating of the second chemically treated coating layer can be calculated by the following equation.

The amount of the dry coating (mg/$m^2$) = the amount of zirconium (mg/$m^2$)$\times$3.5

The second chemically treated coating layer 23 further includes (b) a binding component originating from dehydration condensation of a silanol group and (c) a urethane binding component. The binding component originating from dehydration condensation of a silanol group includes siloxane bonds and the like and is a silane coupling component. A silane coupling agent reacts with the surface of metal and resin upon thermal curing. Specifically, the second chemically treated coating layer 23 is considered to represent siloxane bonds (-Si-O-Si-) dispersed in an urethane resin component and to be bonded (-Si-O-metal-) to a metal oxide and the cobalt metal of the first chemically treated coating layer or the zinc on the galvanized steel sheet.

<Resin film-coated steel sheet 200>

As illustrated in FIG. 2, a resin film-coated steel sheet 200 according to the present disclosure includes an adhesive layer 30 formed on at least one surface of the surface-treated galvanized steel sheet 100 described above and a resin film 40 formed on the adhesive layer 30.

<Adhesive layer 30>

The adhesive layer 30 should preferably be of an adhesive mainly made of a polyester resin, or more preferably be of a polyester urethane-based adhesive. The adhesive layer 30 may be of an adhesive mainly made of an acrylic resin. The adhesive may be of a single kind or a plurality of kinds mixed together in use, or may be a mixture of a polyester-based adhesive and an acryl-based adhesive or an olefin-based adhesive in use.

The thickness of the adhesive layer 30 should preferably be in a range of 1 to 4 $\mu$m. For increasing the on-processing adhesion between the second chemically treated coating layer 23 and the resin film 40, the adhesive layer 30 may contain an adhesion enhancer. An example of the adhesion enhancer is a silane coupling agent having a trimethoxysilyl group, an amino group, and an epoxy group.

<Resin film 40>

The resin film 40 may be a film for use in building material applications. The resin film 40 may be a polyvinyl chloride film, a polyester film, an acryl film, or an olefin film, for example. The resin film 40 may be a transparent film or a colored film. The resin film 40 may be a film of elaborate design, e.g., a film with an embossed surface. The resin film 40 may be a laminated film made of a plurality of different materials. For example, the resin film 40 may be a laminated film made up of a polyethylene terephthalate film and a polyvinyl chloride film. The thickness of the resin film 40 should preferably be 0.06 mm or larger. Incidentally, though there is no particular upper limit for the thickness of the resin film 40, the thickness thereof should preferably be 0.5 mm or smaller from the standpoint of cost.

Generally, when a surface-treated steel sheet is covered with a resin film having a thickness of 0.06 mm or larger and is then processed to shape, the resin film may be peeled off by internal stresses. However, the resin film-coated steel sheet according to the present disclosure has its on-processing adhesion greatly enhanced. The reason for the enhanced on-processing adhesion is generally as follows.

When a steel sheet is stretched by processing, a stressing load is applied to the chemically treated layer thereof that contains an inorganic component. If the chemically treated layer is of a predetermined thickness or larger, it is unable to keep up with the processing process, allowing forces to concentrate on the interface between the chemically treated layer and the galvanized layer. As a result, the chemically treated layer causes a cohesive failure, peeling off the resin film. The foregoing is the reason why the chemically treated layer is peeled off from the general resin film-coated steel sheet.

According to the present disclosure, on the other hand, the chemically treated layer is of a two-layer structure including the first chemically treated coating layer containing the cobalt metal and the second chemically treated coating layer containing the coupling agent component, thereby enhancing the on-processing adhesion.

<Building panel 300>

Now, a building panel 300 according to the present embodiment will be described below. As illustrated in FIG. 3, the building panel 300 according to the present embodiment resides in incorporating the surface-treated galvanized steel sheet 100 or the resin film-coated steel sheet 200. Specifically, the building panel 300 according to the present embodiment includes a reverse-side paint layer 50 on the surface of the resin film-coated steel sheet 200 that is opposite the resin film 40. The thickness of the reverse-side paint layer 50 may be in a range of 5 to 20 μm, for example, though it is not particularly restrictive. A known paint for use in general building applications, e.g., an epoxy-based paint or a polyester-based paint, is applicable as the material of the reverse-side paint layer 50.

Further, the building panel 300 according to the present embodiment may include a metal layer, a resin layer, a gypsum board layer, and a volcanic silicates fiber reinforced multi-layer board, not depicted, on at least one surface of the reverse-side paint layer 50.

The building panel 300 according to the present embodiment can be used as an interior material such as a bathroom panel or a kitchen panel, for example. More specifically, the building panel 300 is applicable as a unitized bathroom interior material, a composite magnetic panel in a kitchen, and a panel attachable to a wall in a room, for example. The building panel 300 is also applicable as an exterior material of an entrance door, for example.

<Method of manufacturing a surface-treated galvanized steel sheet>

Next, a method of manufacturing the surface-treated galvanized steel sheet 100 according to the present embodiment will be described below. As illustrated in FIG. 4, the method of manufacturing the surface-treated galvanized steel sheet 100 according to the present embodiment includes a first treating step and a second treating step to be described below. Incidentally, the method of manufacturing the surface-treated galvanized steel sheet 100 according to the present embodiment may include a known degreasing step. Note that a step of galvanizing a steel sheet will be omitted from description as a known step is applicable therefor.

<Degreasing step>

First, a step of degreasing a galvanized steel sheet will be described below. The degreasing step may be used to remove an oxide film and an oil coat from the surface of a galvanized steel sheet to be used.

Specifically, the degreasing step is carried out by coating the surface of the galvanized steel sheet with a known alkaline treating agent. The known alkaline treating agent may specifically be a silicate-type alkaline treating agent that contains 35% to 40% of sodium metasilicate and 0.1% to 1.0% of potassium hexafluorotitanate(IV) by way of compositional concentration. In the degreasing step, the alkaline treating agent may be used after adjusting its concentration to 2.0% or lower and its liquid temperature to a range of 60°C to 75°C. The galvanized steel sheet may be coated with the alkaline treating agent by a known process such as a spraying process or a dipping process. If a spraying process or a

dipping process is used in the degreasing step, the treating time may range from 9 to 13 seconds. After the treatment, it is preferable to remove the treating agent by washing the galvanized steel sheet with water.

<First treating step>

The first treating step is carried out after the optional degreasing step. The first treating step is a step of forming a first chemically treated coating layer on a galvanized steel sheet. The first chemically treated coating layer contains cobalt metal in a range of 5 to less than 30 mg/m$^2$. The first chemically treated coating layer can be formed on the galvanized steel sheet by coating the galvanized steel sheet with an alkaline treating agent containing a cobalt metal component. The alkaline treating agent may contain a metal chelating agent that contains cobalt(II) nitrate hexahydrate and ferric nitrate.

The alkaline treating agent in the first treating step may more specifically be an alkaline treating agent that contains 20% to 25% of sodium hydroxide, 1% to 5% of cobalt(II) nitrate hexahydrate, and 1% to 5% of ferric nitrate by way of compositional concentration. In the first treating step, the alkaline treating agent may be used after adjusting its liquid temperature to a range of 60°C to 75°C.

In the first treating step, the galvanized steel sheet is coated with the alkaline treating agent by a known process such as a spraying process or a dipping process. If a spraying process or a dipping process is used in the first treating step, the treating time may range from 8 to 16 seconds. After the treatment in the first treating step, byproducts and the treating liquid component that remain on the surface of the galvanized steel sheet may be washed away by water. After the galvanized steel sheet has been washed by water, the surface of the galvanized steel sheet is dried by hot air to form a cobalt metal coating as the first chemically treated coating layer on the surface of the galvanized steel sheet. Incidentally, the cobalt metal contained in the first chemically treated coating layer ranges from 5 to less than 30 mg/m$^2$.

The mechanism of forming the cobalt metal coating as the first chemically treated coating layer on the surface of the galvanized steel sheet in the first treating step is generally as follows. That is, on the galvanized steel sheet, Zn as a base metal is dissolved, emitting electrons that reduce $Co^{2+}$ ions in the alkaline treating liquid for precipitation on the galvanized steel sheet. Stated otherwise, the cobalt metal coating is formed as the first chemically treated coating layer on the surface of the galvanized steel sheet by a displacement-type electroless plating process based on an ionization tendency.

<Second treating step>

In the method of manufacturing the surface-treated galvanized steel sheet according to the present embodiment, the second treating step is carried out after the first treating step. The second treating step is a step of forming a second chemically treated coating layer on the first chemically treated coating layer referred to above. In the second treating step, the second chemically treated coating layer can be formed by coating the first chemically treated coating layer with an aqueous treating agent containing a coupling agent and a metal oxide.

The coupling agent contained in the aqueous treating agent used in the second treating step should preferably be a silane coupling agent or more preferably be a silane coupling agent containing aminoalkylsilane. Since aminoalkylsilane has its amino group bonded to an adhesive layer to be described later and an ester group in the second chemically treated coating layer, it is considered to contribute to on-processing adhesion. More specifically, aminoalkylsilane is considered to contribute to on-processing adhesion because it forms siloxane bonds (-Si-O-Si-) by way of dehydration condensation and is bonded (-Si-O-metal-) to a metal oxide to be described later and the first chemically treated coating layer.

Specifically, aminoalkylsilane may be 3-aminopropyldimethoxymethylsilane, 3-aminopropyltrimethoxysilane, 3-aminopropyldiethoxymethylsilane, 3-aminopropyltriethoxysilane, 3-(2-aminoethylamino)-propyldimethoxymethylsilane, 3-(2-aminoethylamino)-propyltrimethoxysilane, 3-(2-aminoethylamino)-propyltriethoxysilane, [3-(6-aminohexaamino)-propyl]trimethoxysilane, trimethoxy[3-(methylamino)-propyl]silane, [3-(N,N-dimethylamine)-propyl]trimethoxysilane, N-[3-(trimethoxysilyl)-propyl]-1-butaneamine, trimethoxy[3-(phenylamino)-propyl]silane, bis[3-(trimethoxysilyl)-propyl]amine, trimethyl chloride[3-(trimethoxysilyl)-propyl]ammonium, or trimethyl chloride[3-(triethoxysilyl)-propyl]ammonium, for example. Of these materials, 3-aminopropyltriethoxysilane is particularly preferably used for its on-processing adhesion, weather resistance, and better availability, for example.

The coupling agent contained in the aqueous treating agent may be of a single kind or two or more kinds combined together in use. In addition, the silane coupling agent that contains aminoalkylsilane may partly undergo hydrolysis or dehydration condensation.

The content of the coupling agent in the aqueous treating agent may be in a range of 1 to 5 wt% though there is no particular limitation thereon.

The metal oxide contained in the aqueous treating agent may be a zirconium oxidation product, a silicon oxidation product, or a titanium oxidation product, for example. The zirconium oxidation product may be a zirconium oxide. The silicon oxidation product may be a silicon oxide. The titanium oxidation product may be a titanium oxide. Each of these metal oxides may be of a single kind or two or more kinds combined together in use.

Each of these metal oxides should preferably be present as particles and should preferably have an average particle size of 1 μm or smaller. Incidentally, the average particular size of the metal oxide particles should more preferably be in a range of 10 to 300 nm.

The content of the metal oxide in the aqueous treating agent should preferably be in a range of 1.0 to 5.0 wt% of the entire aqueous treating agent though there is no particular limitation thereon. The content of the metal oxide that is 0.1 wt% or larger causes the heat resistance and corrosion resistance of the obtained second chemically treated coating layer to have an increasing tendency. On the other hand, the content of the metal oxide component that is 5.0 wt% or smaller causes the on-processing adhesion of the obtained second chemically treated coating layer to the galvanized steel sheet to have an increasing tendency.

The aqueous treating agent in the second treating step may contain a component for forming urethane bonds. Specifically, the aqueous treating agent in the second treating step should preferably contain blocked isocyanurate and polyester polyol.

More specifically, the blocked isocyanurate contained in the aqueous treating agent should preferably be pyrazole blocked isocyanurate. Specifically, the pyrazole blocked isocyanurate should preferably be obtained by introducing a pyrazole compound as a blocking agent into an isocyanate group in a trimer (e.g., denatured isocyanurate) of an aliphatic polyisocyanate monomer. The blocking agent blocks and inactivates the isocyanate group but unblocks and activates the isocyanate group when heated.

The aliphatic polyisocyanate may specifically be 1,6-hexamethylene diisocyanate, 2,2,4-trimethylhexamethylene diisocyanate, lysine diisocyanate, tetramethylene diisocyanate, or 3-methyl-1,5-pentane diisocyanate, for example. From the standpoint of reactivity and availability, it is preferable to use 1,6-hexamethylene diisocyanate.

Meanwhile, the pyrazole compound may specifically be pyrazole, 3-methylpyrazole, 3,5-dimethylpyrazole, 3-ethylpyrazole, 3,5-diethylpyrazole, or 3-propylpyrazole, for example. Of these materials, it is preferable to use 3,5-dimethylpyrazole that has excellent solubility into a solvent and is frequently used to manufacture pyrazole blocked isocyanurate.

The polyester polyol contained in the aqueous treating agent in the second treating step has a function of reacting with isocyanurate after being dissociated from the blocking agent, to form urethane bonds to increase the on-processing adhesion of the second chemically treated coating layer. The polyester polyol may specifically be obtained by condensing a single kind or two or more kinds of dibasic acid and a single kind or two or more kinds of polyhydric alcohol. The dibasic acid may be a carboxylic acid such as a succinic acid, an adipic acid, a dimer acid, a maleic anhydride, a phthalic anhydride, an isophthalic acid, a terephthalic acid, or 1,4-cyclohexanedicarboxylicacid, for example. The polyhydric alcohol may be ethylene glycol, propylene glycol, diethylene glycol, 1,4-butanediol, neopentyl glycol, 1,6-hexanediol, 2,2,4-trimethyl-1,3-pentanediol, cyclohexanediol, trimethylolpropane, glycerin, pentaerythritol, 2-methylolpropanediol, or ethoxylated trimethylolpropane, for example. Polycaprolactone polyol that is obtained by causing ε-caprolactone to undergo ring-opening polymerization using low-molecular-weight polyol may be used as the polyester polyol.

The content of the component for forming urethane bonds in the aqueous treating agent in the second treating step should preferably be in a range of 0.1 to 0.5 wt% though there is no particular limitation thereon.

The aqueous treating agent in the second treating step may further contain known substances such as a solvent, a catalyst, a stabilizer, and a pH adjuster.

The pH of the aqueous treating agent in the second treating step should preferably be 7 or smaller or more preferably be in a range of 5 to 7. The pH of 7 or smaller increases the storage stability of the aqueous treating agent.

The first chemically treated coating layer may be coated with the aqueous treating agent by a roll coating process. The aqueous treating agent applied to the first chemically treated coating layer is then dried at an attained plate temperature ranging from 80°C to 100°C in a hot-air drying oven to form an organic-inorganic composite coating as the second chemically treated coating layer. The amount of a dry coating of the second chemically treated coating layer should preferably be in a range of 4 to 600 mg/$m^2$ or more preferably be in a range of 30 to 70 mg/$m^2$. The amount of the dry coating of the second chemically treated coating layer can be measured by a known X-ray fluorescence analyzer. In addition, the second chemically treated coating layer should preferably have a thickness of 1 μm or smaller.

Incidentally, the amount of zirconium contained in the second chemically treated coating layer that has been dried should preferably be in a range of 1.2 to 171.4 mg/$m^2$ or more preferably be in a range of 8.6 to 20.0 mg/$m^2$. The amount of the dry coating of the second chemically treated coating layer can be converted from the amount of zirconium. Specifically, the amount of the dry coating of the second chemically treated coating layer can be calculated by the following equation.

The amount of the dry coating (mg/$m^2$) = the amount of zirconium (mg/$m^2$)$\times$3.5

<Method of manufacturing a resin film-coated steel sheet>

Next, a method of manufacturing the resin film-coated steel sheet 200 according to the present embodiment will be described below. As illustrated in FIG. 4, the method of manufacturing the resin film-coated steel sheet 200 according to

the present embodiment includes a third treating step and a fourth treating step to be described below, following the first treating step and the second treating step described above.

<Third treating step>

In the third treating step, an adhesive layer is formed on the second chemically treated coating layer. The adhesive layer 30 that is formed should preferably have a thickness ranging from 1 to 4 μm. In the third treating step, a known adhesive for use in building material applications may be applied to the second chemically treated coating layer by a known process. For example, a solvent-based adhesive containing a silane coupling agent made of a polyester urethane-based resin and a trimethoxysilyl group and an amino group is applied to the second chemically treated coating layer by a roll coater and is then dried by heating to obtain an adhesive layer having a thickness ranging from 1 to 4 μm.

<Fourth treating step>

In the fourth treating step, a resin film is layered on the adhesive layer. Specifically, after the third treating step, the surface-treated galvanized steel sheet with the adhesive layer formed thereon is heated to a curing temperature for the adhesive or higher. After the adhesive layer and the resin film are held against each other, they are caused to travel between a pair of rolls to layer the resin film on the adhesive layer. Alternatively, after the third treating step, a process of extruding a molten resin may be applied.

<Fifth treating step>

Incidentally, a method of manufacturing the building panel according to the disclosure may include a step (fifth treating step) of forming a reverse-side paint layer on the surface of the resin film-coated steel sheet obtained as described above that is opposite the resin film. A known process may be applied to form the reverse-side paint layer. The reverse-side paint layer may be formed simultaneously with the third treating step or the fourth treating step.

Inventive Examples

The present invention will be described more specifically below using Inventive Examples.

<Manufacture of a surface-treated galvanized steel sheet>

An untreated hot-dip galvanized steel sheet (having a thickness of 0.45 mm) according to JIS G3302 was prepared. Providing white rust or the like had been developed on the surface of the hot-dip galvanized steel sheet during storage, it was degreased by a known process to be described below (degreasing step). The degreasing process was carried out by a spray dipping process performed (for 11±2 seconds) using a silicate-type alkaline treating agent (in a concentration of 2% and at a liquid temperature of 65±5°C) that contains sodium metasilicate. After the degreasing process, the treating agent is removed by washing the steel sheet with water.

Then, a first chemically treated coating layer was formed on the surface of the hot-dip galvanized steel sheet by using an alkaline treating agent of the composition to be described below (first treating step).

Solvent: aqueous solution of 25% of sodium hydroxide
Metal component: 5 wt% of cobalt(II) nitrate hexahydrate
Liquid temperature: 60°C to 75°C
pH: 11.5
Electric conductivity: 115 mS
Treating process: Spray dipping process (12±4 seconds)

After the treatment, the alkaline treating agent was removed by washing with water, forming the first chemically treated coating layer.

Then, a second chemically treated coating layer was formed on the first chemically treated coating layer by using an aqueous treating agent of the composition to be described below (second treating step).

Solvent: 95 wt% of water, 1.5 wt% of ethanol
Coupling agent (1.3 wt% of 3-aminopropyltriethoxysilane)
Metal oxide (1.1 wt% of zirconium oxide, 0.02 wt% of hafnium oxide, 0.6 wt% of silicon oxide)
Blocked isocyanurate (0.15 wt% of 1,6-hexamethylene diisocyanate, 0.06 wt% of 3,5-dimethylpyrazole)

0.2 wt% of polyester polyol
pH: 5 to 7

In the second treating step, after the aqueous treating agent was applied by a roll coater, it was dried at a temperature ranging from 80°C to 100°C, to form a second chemically treated coating layer.

<Manufacture of a resin film-coated steel sheet>

A resin film was laminated on the surface-treated galvanized steel sheet thus obtained with an adhesive layer interposed therebetween.

An adhesive layer was formed on the second chemically treated coating layer (third treating step). The adhesive was a solvent-based adhesive containing a silane coupling agent made of a polyester urethane-based resin and a trimethoxysilyl group and an amino group.

Then, a resin film was laminated on the adhesive layer (fourth treating step). The resin film was either (A) or (B) below.

(A) PET/vinyl chloride multi-layer resin film (PET/vinyl chloride)

A multi-layer film of an elongate PET film (0.025 mm) and vinyl chloride (0.10 mm)

(B) PET/PBT multi-layer resin film (PET/PBT)

A multi-layer film of an elongate PET film (0.025 mm) and PBT (0.075 mm)

The surface-treated galvanized steel sheet with the adhesive layer formed thereon was heated to the attained plate temperature and affixed to the resin film, thus obtaining a resin film-coated steel sheet. Incidentally, the attained plate temperature was 200°C for the PET/vinyl chloride multi-layer resin film and 230°C for the PET/PBT multi-layer resin film.

<Measurement and assessment of the on-processing adhesion of the resin film depending on the amount of cobalt in the first chemically treated coating layer>

With respect to resin film-coated steel sheets according to Inventive Examples and Comparative Examples, the adhesion upon processing of the resin film depending on the amount of cobalt in the first chemically treated coating layer was assessed from the results of a double-cross Erichsen cupping test. Specifically, the assessment was performed according to the adhesion test stipulated in "JIS K 6744 2019: Polyvinyl chloride prepainted and laminated metal sheet and strip, paragraph 9." Measuring conditions are indicated below. The results of the measurement are given in Table 1.

Test method

(1) A test piece having a size of approximately 75×150 mm or more was cut out of the resin film-coated steel sheet according to each of Inventive Examples and Comparative Examples.
(2) Two straight slits extending along a vertical axis and two straight slits extending along a horizontal axis were cut in the test piece to the steel sheet by a cutter, the slits along the vertical axis being at positions spaced 2.5 mm apart from a vertical central line of the test piece on both sides of the central line, the slits along the horizontal axis being at positions spaced 2.5 mm apart from a horizontal central line of the test piece on both sides of the central line. Each of the slits was 50 mm long. Incidentally, the point of intersection of the vertical and horizontal central lines is referred to as a test position. The slit test piece was set in an Erichsen testing machine (an apparatus according to JIS B7729).
(3) Specifically, the slit surface of the test piece was directed in facing relation to the die of the testing machine with the test position aligned with the centers of the punch, the die, and the blank holder.
(4) The punch was pressed into the test piece by a distance of 8 mm at as uniform a speed as possible. The pressing speed was kept within a range of 30 to 120 mm per minute, and the test environment temperature was 25±5°C.

Assessing method

(5) After the punch was pressed in, the test piece was removed from the Erichsen testing machine. The slit area of the

test piece was visually observed to check if the resin film was peeled off or not.
(6) The tested test piece was assessed in five stages on the basis of decision standards given below. Note that the assessment standards for the tested test piece are schematically illustrated in FIG. 5.

A: The resin film had no abnormalities (no exfoliation).
B: The resin film was slightly exfoliated at the edges.
C: The resin film was obviously exfoliated at the edges.
D: The resin film was largely exfoliated at the edges.
E: The resin film was exfoliated in its entirety.

A and B are regard as "Good" (can be put to practical use), C as "Fair" (difficult to put to practical use), and D and E as "Poor" (impossible to put to practical use). These were included in the tables.

<Test and assessment of the corrosion resistance of the resin film-coated steel sheet depending on the amount of cobalt in the first chemically treated coating layer >

A salt water spraying test was conducted to assess the corrosion resistance of the resin film-coated steel sheet according to JIS Z2371. A test piece was prepared similarly to the test of the on-processing adhesion of the resin film, crosscut in the film-coated surface to the steel sheet, and tested in a neutral salt water spraying test (with an aqueous solution of 5% NaCl) for 1000 hours. The tested test piece was measured for blister widths in the crosscut area and the flat area. The results were assessed as follows.

Good: The resin film was peeled off at the crosscut area by less than 10 mm at maximum, with no blisters observed from the flat area.
Fair: The resin film was peeled off at the crosscut area by 10 mm or more at maximum, with no blisters observed from the flat area.
Poor: The resin film was peeled off at the crosscut area in its entirety, or blisters were observed from the flat area in its entirety.

<Measurement and assessment of the on-processing adhesion of the resin film depending on the deposited amount of the second chemically treated coating layer>

With respect to the resin film-coated steel sheet according to each of Inventive Examples and Comparative Examples, the adhesion upon processing of the resin film depending on the deposited amount of the second chemically treated coating layer was assessed from the results of a double-cross Erichsen cupping test. A measuring method and an assessing method were carried out similarly to the assessment depending on the amount of cobalt, and the results of the measurement are given in Table 2.

<Measurement and assessment of the accelerated hygrothermal adhesion depending on the deposited amount of the second chemically treated coating layer>

A hygrothermal adhesion test was conducted to assess the hygrothermal adhesion of the resin film according to JIS K6744 2019: Polyvinyl chloride prepainted and laminated metal sheet and strip, paragraph 9. A test piece was prepared similarly to the test of the on-processing adhesion of the resin film, crosscut in the film-coated surface to the steel sheet, and dipped in boiling water for 20 hours. After the test piece was removed and dried, the resin film was peeled off from the test piece, and the peel length was measured and assessed as follows.

Good: The peel length was less than 10 mm.
Fair: The peel length ranged from more than 10 to 20 mm.
Poor: The peel length was more than 20 mm.

(Inventive Examples 1 through 10, Comparative Examples 1 through 6)

The resin films were of the kinds indicated in Table 1, and the content of cobalt metal in the first chemically treated coating layer was varied to produce resin film-coated steel sheets. The content of cobalt metal in the first chemically treated coating layer was varied by varying the number of seconds for which the spray dipping process was performed, and varying the liquid temperature of the treating liquid. The liquid temperatures of the treating liquid are indicated in Table 1. It was confirmed that a resin film-coated steel sheet having both on-processing adhesion and corrosion resistance was obtained

if the content of cobalt metal in the first chemically treated coating layer ranged from 5 to less than 30 mg/m$^2$.

(Inventive Examples 11 through 19, Comparative Examples 7 through 9)

The resin films were of the kinds indicated in Table 2, and the amount of coating of the second chemically treated coating layer was varied to produce resin film-coated steel sheets. The amount of coating of the second chemically treated coating layer was varied by varying the wire diameter of the coating bar coater used to apply the aqueous treating agent. Providing the resin film was a PET/vinyl chloride multi-layer film, it was confirmed that good on-processing adhesion was obtained if the amount of coating of the second chemically treated coating layer ranged from 4 to 600 mg/m$^2$. Providing the resin film was a PET/PBT multi-layer film, it was confirmed that good on-processing adhesion was obtained if the amount of coating of the second chemically treated coating layer ranged from 10 to 600 mg/m$^2$.

(Reference Example 1)

A surface-treated steel sheet was prepared by forming an inorganic chromium-free chemically treated film (the amount of coating: 300 mg/m$^2$) on a hot-dip galvanized steel plate (having a sheet thickness of 0.45 mm) according to JIS G3302 (coating weight: Z18). The surface of the surface-treated steel sheet was coated with a polyester-based adhesive (having a thickness of 3 μm) and laminated with a resin film. The resin film was a multi-layer film of elongated PET and colored vinyl chloride (having a total thickness of 0.10 mm). The results of a double-cross Erichsen cupping test conducted similarly to Inventive Example 1 are indicated in Table 2.

(Reference Example 2)

A test was conducted similarly to Reference Example 1 except that the chemically treated film was an organic chromium-free chemically treated film (the amount of coating: 700 mg/m$^2$). The results are indicated in Table 2.

(Reference Example 3)

A test was conducted similarly to Reference Example 1 except that the chemically treated film was an organic-inorganic chromium-free chemically treated film (the amount of coating: 700 mg/m$^2$). Incidentally, the chemically treated coating according to Reference Example 3 lacked a layer containing cobalt metal. Though a Zr-based treated coating was formed, it did not contain Si. The results are indicated in Table 2.

(Analysis of Reference Examples 1 through 3)

It was confirmed that the resin film according to any of Reference Examples 1 through 3 was peeled off when it was processed in a double-cross Erichsen cupping test. The reason is considered to reside in that the chemically treated coating fails to keep up with the processing process, allowing stresses to concentrate on the interface between the chemically treated layer and the galvanized layer in the slit area.

[Table 1]

| Inventive Examples/ Comparative Examples | First chemically treated coating layer | | Second chemically treated coating layer | Kind of resin film | Assessment of on-processing adhesion (Double-cross Erichsen) | | Assessment of corrosion resistance |
|---|---|---|---|---|---|---|---|
| | Amount of Co (mg/m$^2$) | Liquid temperature (°C) | Deposited amount (mg/m$^2$) | | | | |
| Inventive Example 1 | 5 | 60 | 50 | PET/vinyl chloride | A | Good | Fair |
| Inventive Example 2 | 8 | 60 | 50 | PET/vinyl chloride | A | Good | - |
| Inventive Example 3 | 10 | 65 | 50 | PET/vinyl chloride | A | Good | - |

(continued)

| Inventive Examples/ Comparative Examples | First chemically treated coating layer | | Second chemically treated coating layer | Kind of resin film | Assessment of on-processing adhesion (Double-cross Erichsen) | | Assessment of corrosion resistance |
|---|---|---|---|---|---|---|---|
| | Amount of Co ($mg/m^2$) | Liquid temperature (°C) | Deposited amount ($mg/m^2$) | | | | |
| Inventive Example 4 | 15 | 65 | 50 | PET/vinyl chloride | A | Good | Good |
| Inventive Example 5 | 25 | 65 | 50 | PET/vinyl chloride | B | Good | Good |
| Inventive Example 6 | 5 | 60 | 50 | PET/PBT | A | Good | Good |
| Inventive Example 7 | 8 | 60 | 50 | PET/PBT | A | Good | - |
| Inventive Example 8 | 10 | 65 | 50 | PET/PBT | A | Good | - |
| Inventive Example 9 | 15 | 65 | 50 | PET/PBT | A | Good | Good |
| Inventive Example 10 | 25 | 65 | 50 | PET/PBT | B | Good | Good |
| Comparative Example 1 | 0 | - | 50 | PET/vinyl chloride | E | Poor | Poor |
| Comparative Example 2 | 4 | 60 | 50 | PET/vinyl chloride | C | Fair | - |
| Comparative Example 3 | 30 | 70 | 50 | PET/vinyl chloride | C | Fair | - |
| Comparative Example 4 | 0 | - | 50 | PET/PBT | D | Poor | Fair |
| Comparative Example 5 | 4 | 60 | 50 | PET/PBT | C | Fair | - |
| Comparative Example 6 | 30 | 70 | 50 | PET/PBT | C | Fair | - |

[Table 2]

| | First chemically treated coating layer | Second chemically treated coating layer | Kind of resin film | Assessment of on-processing adhesion (Double-cross Erichsen) | | Assessment of accelerated hygrothermal adhesion |
|---|---|---|---|---|---|---|
| | Amount of Co ($mg/m^2$) | Deposited amount ($mg/m^2$) | | | | |
| Inventive Example 11 | 15 | 4 | PET/vinyl chloride | A | Good | Good |
| Inventive Example 12 | 15 | 10 | PET/vinyl chloride | A | Good | Good |
| Inventive Example 13 | 15 | 50 | PET/vinyl chloride | A | Good | Good |
| Inventive Example 14 | 15 | 300 | PET/vinyl chloride | A | Good | Good |

(continued)

| | First chemically treated coating layer | Second chemically treated coating layer | Kind of resin film | Assessment of on-processing adhesion (Double-cross Erichsen) | | Assessment of accelerated hygrothermal adhesion |
|---|---|---|---|---|---|---|
| | Amount of Co (mg/m$^2$) | Deposited amount (mg/m$^2$) | | | | |
| Inventive Example 15 | 15 | 600 | PET/vinyl chloride | B | Good | Good |
| Inventive Example 16 | 15 | 10 | PET/PBT | A | Good | Good |
| Inventive Example 17 | 15 | 50 | PET/PBT | A | Good | Good |
| Inventive Example 18 | 15 | 300 | PET/PBT | B | Good | Good |
| Inventive Example 19 | 15 | 600 | PET/PBT | B | Good | Fair |
| Comparative Example 7 | 15 | 700 | PET/vinyl chloride | C | Fair | Poor |
| Comparative Example 8 | 15 | 4 | PET/PBT | C | Fair | Poor |
| Comparative Example 9 | 15 | 700 | PET/PBT | C | Fair | Fair |
| Reference Example 1 | - | 300 | PET/vinyl chloride | D | Poor | - |
| Reference Example 2 | - | 700 | PET/vinyl chloride | D | Poor | - |
| Reference Example 3 | - | 700 | PET/vinyl chloride | E | Poor | - |

Various modifications may be made in the embodiment and the Inventive Examples described above without departing from the scope of the present invention.

[Industrial Applicability]

The present invention is appropriately applicable to a bathroom wall material for unitized bathrooms and the like, an exterior material and an interior magnetic panel as housing members, and an interior material for systematized kitchens and the like.

[Reference Signs List]

100: Surface-treated galvanized steel sheet
10: Galvanized steel sheet
200: Resin film-coated steel sheet
20: Chemically treated film
21: First chemically treated coating layer
30: Adhesive layer
40: Resin film
300: Building panel

## Claims

**1.** A surface-treated galvanized steel sheet comprising:

a steel sheet;
a galvanized layer formed on the steel sheet;
a first chemically treated coating layer formed on the galvanized layer and containing cobalt metal in a range of 5 to less than 30 mg/$m^2$; and
a second chemically treated coating layer formed on the first chemically treated coating layer and containing (a) a zirconium component, (b) a binding component originating from dehydration condensation of a silanol group, and (c) a urethane binding component.

**2.** The surface-treated galvanized steel sheet according to claim 1, wherein the second chemically treated coating layer has an amount of coating in a range of 4 to 600 mg/$m^2$.

**3.** The surface-treated galvanized steel sheet according to claim 2, wherein the second chemically treated coating layer contains an amount of zirconium in a range of 1.2 to 171.4 mg/$m^2$.

**4.** A resin film-coated steel sheet comprising:

the surface-treated galvanized steel sheet according to any one of claims 1 through 3;
an adhesive layer formed on the surface-treated galvanized steel sheet; and
a resin film formed on the adhesive layer.

**5.** The resin film-coated steel sheet according to claim 4, wherein

the resin film includes at least one of a polyvinyl chloride film, a polyester film, an acryl film, and an olefin film, and the resin film has a thickness of 0.06 mm or larger.

**6.** The resin film-coated steel sheet according to claim 5, wherein the adhesive layer mainly includes a polyester resin or an acrylic resin.

**7.** A building panel comprising: the resin film-coated steel sheet according to claim 5.

**8.** A method of manufacturing a surface-treated galvanized steel sheet, the method comprising:

a first treating step of forming, on the galvanized layer, a first chemically treated coating layer containing cobalt metal in a range of 5 to less than 30 mg/$m^2$ on a galvanized steel sheet by coating the galvanized steel sheet with an alkaline treating agent that includes a metal chelating agent containing cobalt(II) nitrate hexahydrate and ferric nitrate; and
a second treating step of coating the first chemically treated coating layer with an aqueous treating agent including a coupling agent, a metal oxide, blocked isocyanurate, and polyester polyol as constituent elements, and drying the aqueous treating agent at 60°C or higher.

**9.** The method of manufacturing a surface-treated galvanized steel sheet according to claim 8, wherein, in the first treating step, the galvanized steel sheet is coated with the alkaline treating agent having a pH of 12 or higher and a liquid temperature ranging from 60°C to 75°C.

**10.** The method of manufacturing a surface-treated galvanized steel sheet according to claim 9, wherein the aqueous treating agent has a pH in a range of 5 to 7, the coupling agent contains aminoalkylsilane, and the blocked isocyanurate includes pyrazole blocked isocyanurate.

**11.** A method of manufacturing a resin film-coated steel sheet, the method comprising:

a third treating step of coating the surface-treated galvanized steel sheet according to any one of claims 1 through 3 with a polyester-based adhesive to a thickness ranging from 1 to 4 μm; and
a fourth treating step of heating the surface-treated galvanized steel sheet coated with the polyester-based

adhesive to 180°C or higher and covering the polyester-based adhesive with a resin film.

FIG. 1

100
20
10
20
23
21
13
11
13
21
23

FIG. 2

200
40
30
23
21
13
11
13
21
23
20
10
100
20

FIG. 3

300
40
30
23
20
21
13
11
200
100
10
13
21
20
23
50

FIG. 4

START
FIRST TREATING STEP
SECOND TREATING STEP
SURFACE-TREATED GALVANIZED STEEL SHEET
THIRD TREATING STEP
FOURTH TREATING STEP
RESIN FILM-COATED STEEL SHEET
END

FIG. 5

| RATING | VISUAL OBSERVATION | |
|---|---|---|
| | VIEWED FROM ABOVE | DETERMINATION |
| A | | NO ABNORMALITIES (NO EXFOLIATION) |
| B | | FILM EDGES SLIGHTLY EXFOLIATED |
| C | | FILM EDGES OBVIOUSLY EXFOLIATED |
| D | | FILM EDGES LARGELY EXFOLIATED |
| E | | FILM EXFOLIATED IN ITS ENTIRETY |

*ILLUSTRATED FILLED-IN AREAS REPRESENT PEELED-OFF AREAS

**INTERNATIONAL SEARCH REPORT**

International application No. **PCT/JP2024/036958**

**A. CLASSIFICATION OF SUBJECT MATTER**

***C23C 28/00***(2006.01)i; ***B32B 15/01***(2006.01)i; ***B32B 15/08***(2006.01)i; ***C23C 22/60***(2006.01)i; ***C23C 22/68***(2006.01)i
FI: C23C28/00 C; B32B15/01 C; B32B15/08 Q; C23C22/60; C23C22/68

According to International Patent Classification (IPC) or to both national classification and IPC

**B. FIELDS SEARCHED**

Minimum documentation searched (classification system followed by classification symbols)

C23C22/00 - 22/86, C23C24/00 - 30/00, B32B1/00 - 43/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2008-304795 A (TOYO KOHAN CO., LTD.) 18 December 2008 (2008-12-18) entire text | 1-11 |
| A | WO 2018/123996 A1 (NIPPON PAINT SURF CHEMICALS CO., LTD.) 05 July 2018 (2018-07-05) entire text | 1-11 |
| A | JP 2004-183015 A (NIHON PARKERIZING CO., LTD.) 02 July 2004 (2004-07-02) entire text | 1-11 |
| A | JP 2008-025023 A (NIPPON STEEL CORPORATION, MITSUI CHEMICALS POLYURETHANES INC.) 07 February 2008 (2008-02-07) entire text | 1-11 |
| A | JP 2003-300278 A (TOYO KOHAN CO., LTD.) 21 October 2003 (2003-10-21) entire text | 1-11 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **27 November 2024** | **10 December 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (July 2022)

**INTERNATIONAL SEARCH REPORT**

International application No. **PCT/JP2024/036958**

**C. DOCUMENTS CONSIDERED TO BE RELEVANT**

| Category* | Citation of document, with indication, where appropriate, of the relevant passages | Relevant to claim No. |
|---|---|---|
| A | JP 2009-051196 A (JFE STEEL CORPORATION) 12 March 2009 (2009-03-12) entire text | 1-11 |
| A | JP 03-161333 A (NIPPON STEEL CORPORATION) 11 July 1991 (1991-07-11) entire text | 1-11 |
| A | JP 2022-091059 A (JFE STEEL CORPORATION) 20 June 2022 (2022-06-20) entire text | 1-11 |
| A | JP 09-094912 A (NKK CORP.) 08 April 1997 (1997-04-08) entire text | 1-11 |
| A | WO 2020/213690 A1 (NIPPON STEEL CORP.) 22 October 2020 (2020-10-22) entire text | 1-11 |
| A | WO 2016/199852 A1 (NIPPON STEEL & SUMITOMO METAL CORP.) 15 December 2016 (2016-12-15) entire text | 1-11 |
| A | JP 2011-037083 A (SUMITOMO METAL INDUSTRIES, LTD.) 24 February 2011 (2011-02-24) entire text | 1-11 |
| A | JP 2010-201353 A (JFE STEEL CORPORATION, KANSAI PAINT CO., LTD.) 16 September 2010 (2010-09-16) entire text | 1-11 |
| A | US 5958578 A (THE BOEING COMPANY) 28 September 1999 (1999-09-28) whole document | 1-11 |

Form PCT/ISA/210 (second sheet) (July 2022)

**INTERNATIONAL SEARCH REPORT**
**Information on patent family members**

International application No.
**PCT/JP2024/036958**

| Patent document cited in search report | Publication date (day/month/year) | Patent family member(s) | Publication date (day/month/year) |
|---|---|---|---|
| JP 2008-304795 A | 18 December 2008 | (Family: none) | |
| WO 2018/123996 A1 | 05 July 2018 | CN 110168139 A<br>whole document | |
| JP 2004-183015 A | 02 July 2004 | (Family: none) | |
| JP 2008-025023 A | 07 February 2008 | US 2010/0233490 A1<br>whole document<br>WO 2007/148801 A1<br>whole document<br>EP 2034051 A1<br>whole document | |
| JP 2003-300278 A | 21 October 2003 | (Family: none) | |
| JP 2009-051196 A | 12 March 2009 | (Family: none) | |
| JP 03-161333 A | 11 July 1991 | (Family: none) | |
| JP 2022-091059 A | 20 June 2022 | (Family: none) | |
| JP 09-094912 A | 08 April 1997 | (Family: none) | |
| WO 2020/213690 A1 | 22 October 2020 | KR 10-2021-0103512 A<br>whole document<br>CN 113383111 A<br>whole document | |
| WO 2016/199852 A1 | 15 December 2016 | US 2018/0100244 A1<br>whole document | |
| JP 2011-037083 A | 24 February 2011 | (Family: none) | |
| JP 2010-201353 A | 16 September 2010 | (Family: none) | |
| US 5958578 A | 28 September 1999 | US 2004/0009344 A1<br>whole document | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022039097 A
- JP 2007119858 A
- JP 2008184659 A
- JP 2020152986 A
- JP 2008163364 A